# EUROPEAN PATENT APPLICATION

(11) **EP 3 937 330 A2**
(43) Date of publication of application: **12.01.2022**
(21) Application number: 21183616.8
(22) Date of filing: 05.07.2021
(51) Int. Cl.: H02J 3/38

(54) **PHOTOVOLTAIC POWER GENERATION SYSTEM, METHOD AND DEVICE FOR GENERATING CURRENT AND VOLTAGE, AND STORAGE MEDIUM**

(30) Priority: 06.07.2020 CN 202010650645
(71) Applicant: Sungrow Power Supply Co., Ltd., Hefei, Anhui 230088 (CN)
(72) Inventor: YUN, Ping, Hefei, Anhui 230088 (CN); GENG, Houlai, Hefei, Anhui 230088 (CN); CUI, Xin, Hefei, Anhui 230088 (CN); XU, Jun, Hefei, Anhui 230088 (CN)
(74) Representative: Biallo, Dario

(57) **Abstract**

A method for generating current and voltage for a photovoltaic power generation system is provided, including: detecting an original current of an MPPT unit; in a case that the original current is greater than or equal to a preset current, controlling the adjustment module to reduce the original current of the MPPT unit; scanning the MPPT unit to determine a scanned current and a scanned voltage of the MPPT unit; obtaining an adjustment current and an adjustment voltage of the adjustment module; adjusting the scanned current and the scanned voltage according to the adjustment current and the adjustment voltage; and generating a current-voltage curve according to the adjusted scanned current and the adjusted scanned voltage. Thus, an overcurrent protection function of the MPPT unit is not triggered in a case of a large current, and thereby a complete current-voltage curve of the photovoltaic power generation system can be obtained.

## Description

### FIELD

The present disclosure is related to the field of electronic power technology, and in particular, to a photovoltaic power generation system, a method and device for generating current and voltage, and a storage medium.

### BACKGROUND

Solar energy has become one of the most promising renewable energy due to its abundant resources, wide distribution, and cleanliness. The industry of solar photovoltaic power generation has developed rapidly and the market scale thereof is continuously expanding. The development and utilization of solar photovoltaic technology is conducive to energy conservation and emission reduction, sustainable development of resources and improvement of the living environment. An IV scanning may be performed on the solar photovoltaic power generation system to obtain a current-voltage curve, which is used to find a maximum power point of the solar photovoltaic string, and to test whether a circuit corresponding to the photovoltaic string is damaged, in poor contact, or the like.

In conventional technologies, the IV scan of the photovoltaic power generation system is performed by scanning from an open circuit voltage to a short circuit current, so as to obtain a complete current-voltage curve. However, with the development of the photovoltaic power generation system, both output current and output voltage of the photovoltaic power generation system have increased significantly, causing the output current exceeding requirements of the photovoltaic power generation system when under severe sun exposure. In this case, an overcurrent protection function is provided in order to protect the safety of devices in the system. The overcurrent protection function is triggered when the current is too high, leading to a failure of obtaining data of the IV scanning when the overcurrent protection function is triggered. Therefore, the obtained current-voltage curve is incomplete.

### SUMMARY

A main objective of the present disclosure is to provide a photovoltaic power generation system, a method and a device for generating current and voltage, and a storage medium, to solve the problem of incompleteness of a current-voltage curve obtained by scanning a photovoltaic power generation system.

In order to realize the above objective, a photovoltaic power generation system is provided in the present disclosure. The photovoltaic power generation system includes a photovoltaic string, a maximum power point tracking (MPPT) unit, an inverter unit, and a grid load. The photovoltaic power generation system further includes an adjustment module connected to the MPPT unit, and the adjustment module is configured to adjust a current of the MPPT unit.

In an embodiment, the adjustment module includes an absorption unit connected between the photovoltaic string and the MPPT unit. The absorption unit includes a first switch unit and a load component which are connected in series. The load component shunts the current of the MPPT unit when the first switch unit is turned on.

In an embodiment, the adjustment module includes a compensation unit connected between the MPPT unit and the inverter unit. The compensation unit is configured to input in reverse a direct current DC current to the MPPT unit.

In an embodiment, the photovoltaic power generation system includes multiple photovoltaic strings connected in parallel, and the adjustment module includes at least one second switch unit. The at least one second switch unit is connected in series between the MPPT unit and at least one of the multiple photovoltaic strings.

In an embodiment, the photovoltaic power generation system includes multiple MPPT units connected in parallel, and the adjustment module includes a third switch unit connected between the photovoltaic string and the MPPT units. The third switch unit is configured to control a number of MPPT units connected to the photovoltaic string.

In order to realize the above objective, a method for generating current and voltage for a photovoltaic power generation system is further provided in the present disclosure. The method includes: detecting an original current of the MPPT unit; and in a case that the original current is greater than or equal to a preset current, the method further includes: controlling the adjustment module to reduce the original current of the MPPT unit; scanning the MPPT unit to determine a scanned current of the MPPT unit and a scanned voltage of the MPPT unit; obtaining an adjustment current of the adjustment module and an adjustment voltage of the adjustment module; adjusting the scanned current and the scanned voltage according to the adjustment current and the adjustment voltage, respectively; and generating a current-voltage curve according to the adjusted scanned current and the adjusted scanned voltage.

In an embodiment, after the detecting an original current of the MPPT unit and in a case that the original current is less than the preset current, the method further includes: scanning the MPPT unit to determine the scanned current of the MPPT unit and the scanned voltage of the MPPT unit; and generating the current-voltage curve according to the scanned current and the scanned voltage.

In an embodiment, the controlling the adjustment module to reduce the original current of the MPPT unit includes: turning off at least one second switch unit. The obtaining the adjustment current of the adjustment module and the adjustment voltage of the adjustment module includes: determining the adjustment current according to a current value of the photovoltaic string connected in series with a second switch unit being turned off; and determining the adjustment voltage based on a voltage value of the photovoltaic string connected in series with the second switch unit being turned off.

In an embodiment, the controlling the adjustment module to reduce the original current of the MPPT unit includes: controlling a third switch unit to increase a number of MPPT units connected to the photovoltaic string. The obtaining the adjustment current of the adjustment module and the adjustment voltage of the adjustment module includes: determining the adjustment current according to a current value of an added MPPT unit being connected to the photovoltaic string; and determining the adjustment voltage according to a voltage value of the added MPPT unit being connected to the photovoltaic string.

In an embodiment, the controlling the adjustment module to reduce the original current of the MPPT unit includes: turning a first switch unit. The obtaining the adjustment current of the adjustment module and the adjustment voltage of the adjustment module includes: determining the adjustment current according to a current value of the absorption unit connected in series with the first switch unit being turned on; and determining the adjustment voltage based on a voltage value of the absorption unit connected in series with the first switch unit being turned on.

In an embodiment, the controlling the adjustment module to reduce the original current of the MPPT unit includes: controlling the compensation unit to input in reverse a direct current (DC) current to the MPPT unit. The obtaining the adjustment current of the adjustment module and the adjustment voltage of the adjustment module includes: determining the adjustment current according to a current value of the compensation unit; and determining the adjustment voltage according to a voltage value of the compensation unit.

In order to realize the above objective, a device for generating current and voltage for a photovoltaic power generation system is further provided in the present disclosure. The device for generating current and voltage for the photovoltaic power generation system includes: a memory, a processor, and a program for generating current and voltage for the photovoltaic power generation system, where the program is stored in the memory and executable on the processor. The program for generating current and voltage for the photovoltaic power generation system, when executed by the processor, causes the processor to implement steps of the above-mentioned method for generating current and voltage for the photovoltaic power generation system.

In order to realize the above objective, a storage medium is further provided in the present disclosure. The storage medium stores a program for generating current and voltage for a photovoltaic power generation system which, when executed by the processor, causes the processor to implement steps of the above-mentioned method for generating current and voltage for the photovoltaic power generation system.

In the photovoltaic power generation system, the method and the device for generating current and voltage, and the storage medium provided in the present disclosure, an original current of the MPPT unit is detected; and in a case that the original current is greater than or equal to a preset current: the adjustment module is controlled to reduce the original current of the MPPT unit; the MPPT unit is scanned to determine a scanned current of the MPPT unit and a scanned voltage of the MPPT unit; an adjustment current of the adjustment module and an adjustment voltage of the adjustment module are obtained; the scanned current and the scanned voltage are adjusted according to the adjustment current and the adjustment voltage; and a current-voltage curve is generated according to the adjusted scanned current and the adjusted scanned voltage. Since the current of the MPPT unit is reduced by the adjustment module to be less than the preset current of the MPPT unit, the overcurrent protection function of the MPPT unit is not triggered, so that a complete current-voltage curve of the photovoltaic power generation system can be obtained in a case of a large current.

### BRIEF DESCRIPTION OF THE DRAWINGS

The realization of the objectives, functional characteristics and advantages of the present disclosure are further described in conjunction with the embodiments and with reference to the accompanying drawings.
Figure 1 is a schematic structural diagram of a photovoltaic power generation system according to a first embodiment of the present disclosure;
Figure 2 is a schematic diagram of a circuit structure of the photovoltaic power generation system according to the first embodiment of the present disclosure;
Figure 3 is a schematic structural diagram of a photovoltaic power generation system according to a second embodiment of the present disclosure;
Figure 4 is a schematic diagram of a circuit structure of the photovoltaic power generation system according to the second embodiment of the present disclosure;
Figure 5 is a schematic structural diagram of a photovoltaic power generation system according to a third embodiment of the present disclosure;
Figure 6 is a schematic diagram of a circuit structure of the photovoltaic power generation system according to the third embodiment of the present disclosure;
Figure 7 is a schematic structural diagram of a photovoltaic power generation system according to a fourth embodiment of the present disclosure;
Figure 8 is a schematic diagram of a circuit structure of the photovoltaic power generation system according to the fourth embodiment of the present disclosure;
Figure 9 is a schematic structural diagram of a photovoltaic power generation system according to a fifth embodiment of the present disclosure;
Figure 10 is a schematic diagram of a hardware structure of a device for generating current and voltage for a photovoltaic power generation system according to an embodiment of the present disclosure;
Figure 11 is a schematic flowchart of a method for generating current and voltage for a photovoltaic power generation system according to the first embodiment of the present disclosure;
Figure 12 is a current-voltage curve generated in step S60 of the method for generating current and voltage for a photovoltaic power generation system according to the present disclosure;
Figure 13 is a schematic flowchart of a method for generating current and voltage for a photovoltaic power generation system according to the second embodiment of the present disclosure;
Figure 14 is a current-voltage curve generated in step S80 of the method for generating current and voltage for a photovoltaic power generation system according to the present disclosure;
Figure 15 is a schematic flowchart of a method for generating current and voltage for a photovoltaic power generation system according to the third embodiment of the present disclosure;
Figure 16 is a schematic diagram of a circuit structure for the method for generating current and voltage for a photovoltaic power generation system according to the third embodiment of the present disclosure;
Figure 17 is a schematic diagram of a circuit structure for the method for generating current and voltage for a photovoltaic power generation system according to the third embodiment of the present disclosure;
Figure 18 is a schematic flowchart of a method for generating current and voltage for a photovoltaic power generation system according to the fourth embodiment of the present disclosure;
Figure 19 is a schematic diagram of a circuit structure for the method for generating current and voltage for a photovoltaic power generation system according to the fourth embodiment of the present disclosure;
Figure 20 is a schematic flowchart of a method for generating current and voltage for a photovoltaic power generation system according to the fifth embodiment of the present disclosure; and
Figure 21 is a schematic flowchart of a method for generating current and voltage for a photovoltaic power generation system according to a sixth embodiment of the present disclosure.

### DETAILED DESCRIPTION

It should be understood that the specific embodiments described herein are only for the purpose of explaining the present disclosure, but not to limit the present disclosure.

A main solution according to an embodiment of the present disclosure includes: detecting an original current of an MPPT (Maximum Power Point Tracking) unit; and in a case that the original current is greater than or equal to a preset current, controlling the adjustment module to reduce the original current of the MPPT unit; scanning the MPPT unit to determine a scanned current and a scanned voltage of the MPPT unit; obtaining an adjustment current and an adjustment voltage of the adjustment module; adjusting the scanned current and the scanned voltage according to the adjustment current and the adjustment voltage; and generating a current-voltage curve according to the adjusted scanned current and the adjusted scanned voltage.

Since the current of the MPPT unit is reduced by the adjustment module to be less than the preset current of the MPPT unit, the overcurrent protection function of the MPPT unit is not triggered, so that a complete current-voltage curve of the photovoltaic power generation system can be obtained in a case of a large current.

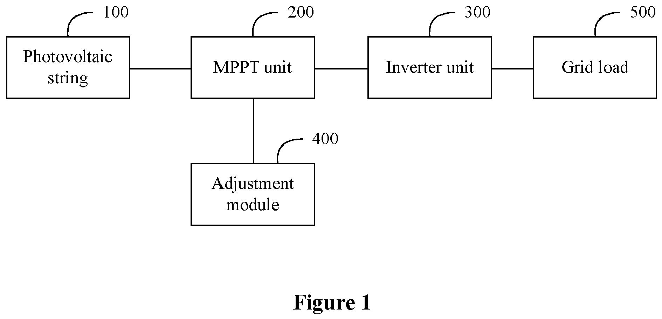

A photovoltaic power generation system is provided in the present disclosure. Figure 1 shows a photovoltaic power generation system according to a first embodiment of the present disclosure. Referring to Figure 1, the photovoltaic power generation system includes a photovoltaic string 100, an MPPT unit 200, an inverter unit 300, and a grid load 500. The photovoltaic power generation system further includes an adjustment module 400 connected to the MPPT unit 200, and the adjustment module 400 is configured to adjust a current of the MPPT unit 200.

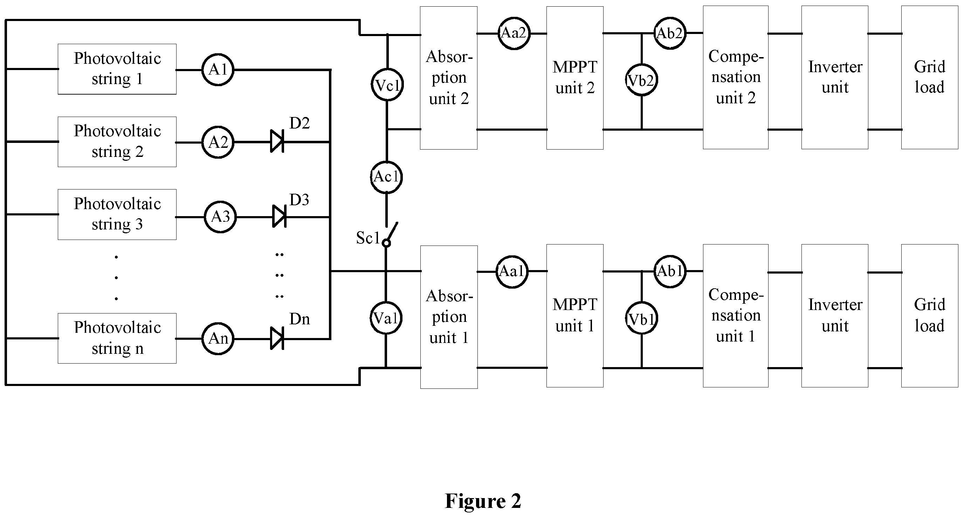

In this embodiment, the photovoltaic string generates voltage and current under the sunlight. The current is transmitted through a wire to the MPPT unit, and in turn to the inverter unit connected to the MPPT unit, and the grid load. When a current of the MPPT unit is greater than or equal to a limited current of the MPPT unit, the current of the MPPT unit is adjusted by the adjustment module to be less than the limited current. When the current of the MPPT unit is less than the limited current of the MPPT unit, the current of the MPPT unit does not need to be adjusted by the adjustment module. As an example, the photovoltaic power generation system may have a structure as shown in Figure 2. The adjustment module may include an absorption unit and a compensation unit. The photovoltaic power generation system may include multiple photovoltaic strings, multiple MPPT units, multiple inverter units, and multiple grid loads. The current of the photovoltaic power generation system is adjusted by the adjustment module, so that the current of the MPPT unit is less than the limited current of the MPPT unit, which solves the problem that the photovoltaic power generation system cannot be scanned to obtain a complete current-voltage curve when the current of the photovoltaic power generation system is greater than the limited current of the MPPT unit.

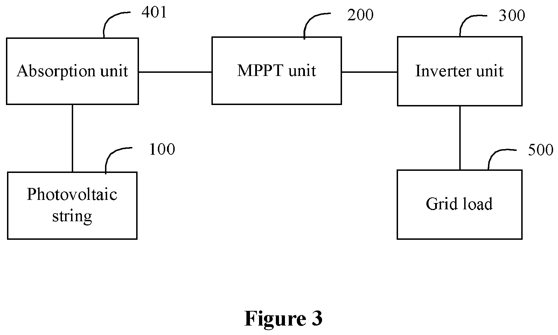

Figure 3 shows a photovoltaic power generation system according to a second embodiment of the present disclosure. Based on the photovoltaic power generation system according to the first embodiment, as shown in Figure 3, the adjustment module 400 includes an absorption unit 401 connected between the photovoltaic string 100 and the MPPT unit 200. The absorption unit 401 includes a first switch unit and a load component that are connected in series. The load component shunts the current of the MPPT unit 200 when the first switch unit is turned on.

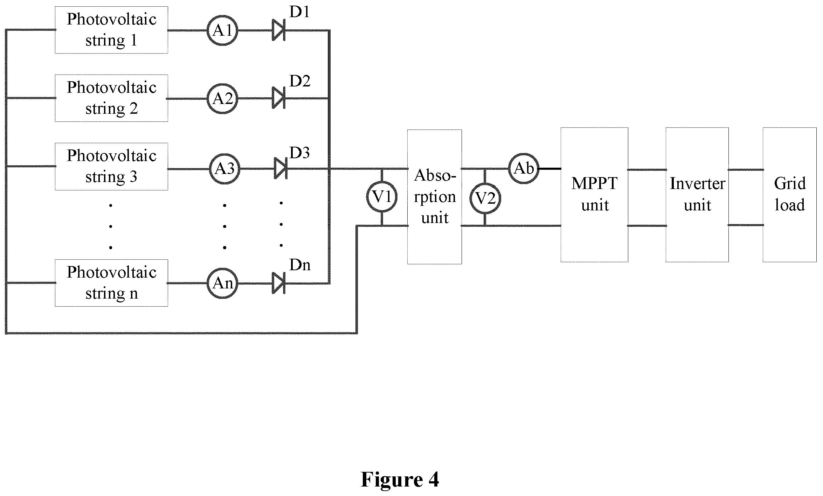

In this embodiment, the absorption unit may be connected in parallel with the MPPT unit, so that the current of the MPPT unit is shunted by the load component in the absorption unit when the first switch unit is turned on. Or otherwise, the absorption unit may be connected in series with the MPPT unit, consuming part of the current of the photovoltaic power generation system when the first switch unit is turned on, so as to shunt the current of the MPPT unit. As an example shown in Figure 4, the absorption unit is configured between multiple photovoltaic strings and the MPPT unit, and is configured to adjust the current input to the MPPT unit. The current of the MPPT unit is adjusted by the photovoltaic strings shunting the current of the MPPT unit, so that the current of the MPPT unit is less than the limited current of the MPPT unit, which solves the problem that the photovoltaic power generation system cannot be scanned to obtain a complete current-voltage curve when the current of the photovoltaic power generation system is greater than the limited current of the MPPT unit.

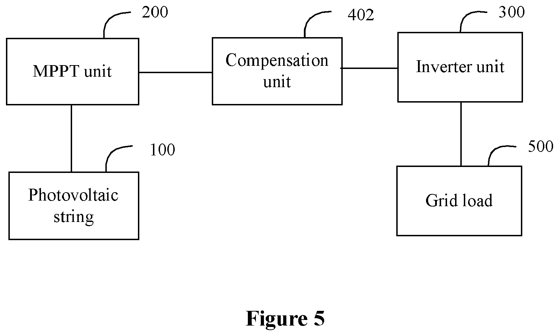

Figure 5 shows a photovoltaic power generation system according to a third embodiment of the present disclosure. Based on the photovoltaic power generation system according to the first or the second embodiment, as shown Figure 5, the adjustment module 400 includes a compensation unit 402 connected between the MPPT unit 200 and the inverter unit 300. The compensation unit 402 is configured to input a direct current (DC) current to the MPPT unit 200 in reverse.

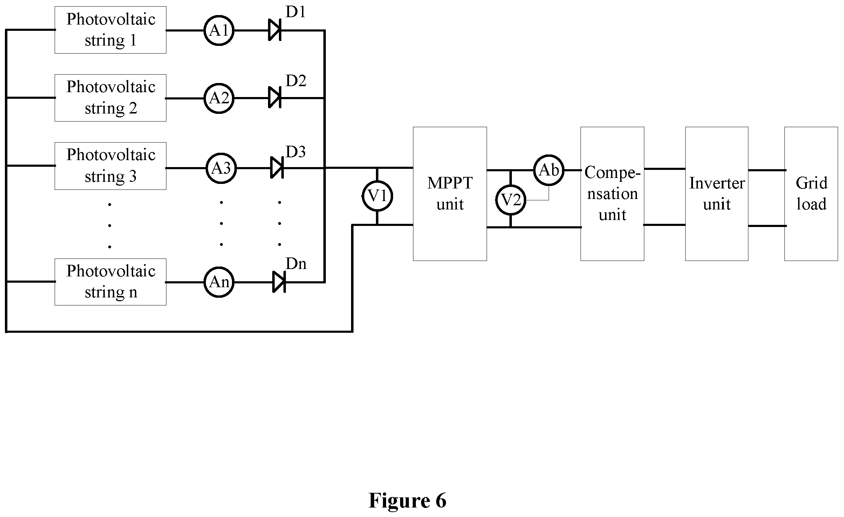

In this embodiment, the inverter unit may convert a DC current or an alternating current (AC) current into a DC current with a certain current value, and input, under a control by the compensation unit, the DC current with the certain current value into the MPPT unit, so that the current of the MPPT unit is adjusted to be less than the limited current of the MPPT unit. As an example shown in Figure 6, the compensation unit is configured between the MPPT unit and the inverter unit, and is configured to adjust the current of the MPPT unit. Such configuration solves the problem that the photovoltaic power generation system cannot be scanned to obtain a complete current-voltage curve when the current of the photovoltaic power generation system is greater than the limited current of the MPPT unit.

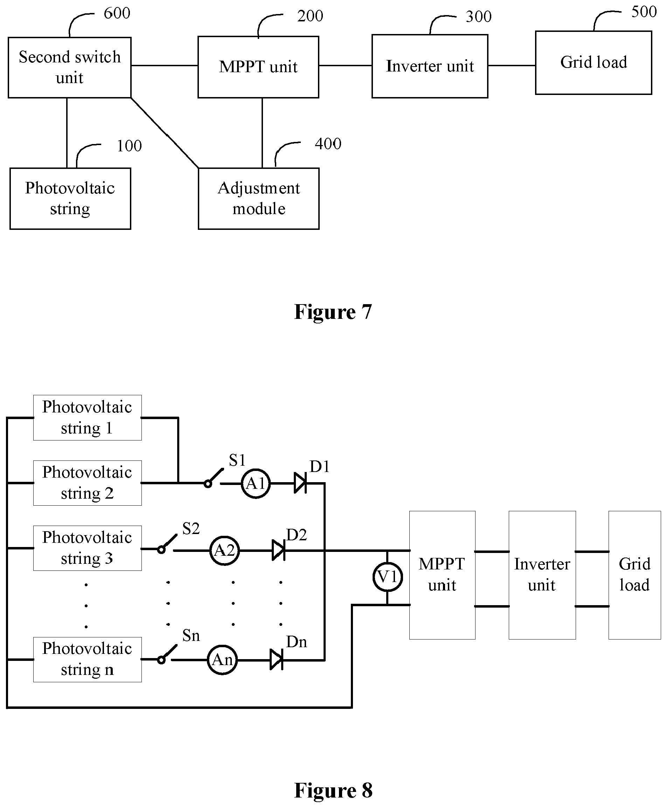

Figure 7 shows a photovoltaic power generation system according to a fourth embodiment of the present disclosure. Based on the photovoltaic power generation system according to any one of the foregoing embodiments, as shown in Figure 7, the photovoltaic power generation system includes multiple photovoltaic strings 100 connected in parallel. The adjustment module 400 includes at least one second switch unit 600, and the at least one second switch 600 is connected in series between the MPPT unit 200 and at least one of the multiple photovoltaic strings 100.

In this embodiment, the number of photovoltaic strings connected in series with the second switch unit is controlled by controlling at least one second switch unit. Turning off the at least one second switch unit may reduce the number of photovoltaic strings, causing the current of the MPPT unit being less than the limited current of the MPPT unit. As an example shown in Figure 8, the at least one second switch unit includes switches S1, S2 ..., and Sn. The at least one second switch unit may be connected in series with at least one of the photovoltaic strings and located between the photovoltaic string and the MPPT unit. Such configuration solves the problem that the photovoltaic power generation system cannot be scanned to obtain a complete current-voltage curve thereof when the current of the photovoltaic power generation system is greater than the limited current of the MPPT unit.

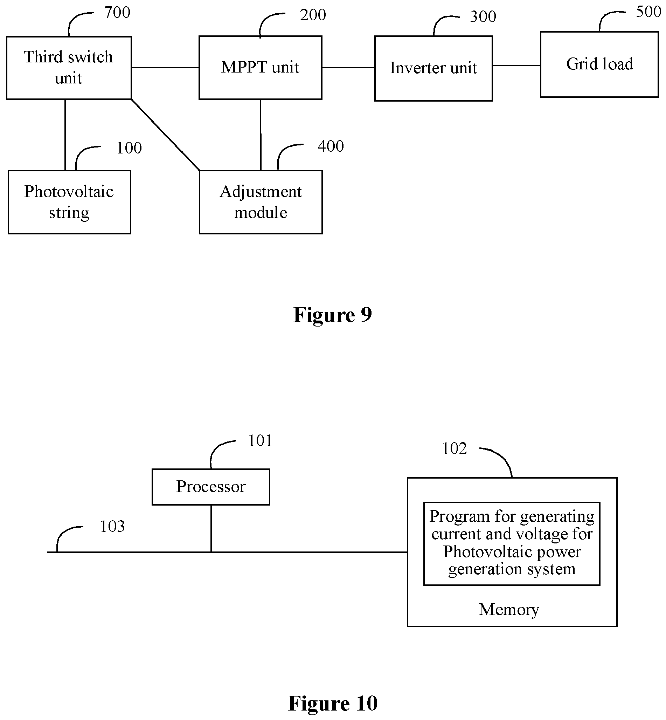

Figure 9 shows a photovoltaic power generation system according to a fifth embodiment of the present disclosure. Based on the photovoltaic power generation system according to any one of the first to the fourth embodiments, as shown in Figure 9, multiple MPPT units 200 are connected in parallel. The adjustment module 400 includes a third switch unit 700 connected between the photovoltaic string 100 and the multiple MPPT units 200. The third switch unit 700 is configured to control the number of MPPT units 200 connected to the photovoltaic string 100.

In this embodiment, when there are multiple MPPT units, the number of MPPT units connected in series with the third switch unit is controlled by controlling the third switch unit. When the third switch unit is turned on, the multiple MPPT units are connected in parallel and shunt current there between, so that the current of a single MPPT unit is reduced. For example, as shown in Figure 2, the third switch unit is denoted with Sc1. When the third switch unit Sc1 is turned on, two MPPT units are connected in parallel so as to reduce the current of any one of the two MPPT units. Making the current of the MPPT unit to be less than the limited current of the MPPT unit solves the problem that the photovoltaic power generation system cannot be scanned to obtain a complete current-voltage curve when the current of the photovoltaic power generation system is greater than the limited current of the MPPT unit.

As an implementation, a device for generating current and voltage based on a photovoltaic power generation system may be as shown in Figure 10.

A device for generating current and voltage for a photovoltaic power generation system is provided according to an embodiment of the present disclosure. The device for generating current and voltage for the photovoltaic power generation system includes a processor 101, such as a CPU, a memory 102, and a communication bus 103. The communication bus 103 is configured to realize connection and communication among these components.

The memory 102 may be a high-speed RAM memory, or a non-volatile memory such as a magnetic disk memory. As shown in Figure 10, the memory 102, as a storage medium, may include a program for generating current and voltage for the photovoltaic power generation system. The processor 101 may be configured to execute the program for generating current and voltage for the photovoltaic power generation system stored in the memory 102 and execute operations including: detecting an original current of the MPPT unit; and in a case that the original current is greater than or equal to a preset current, further including: controlling the adjustment module to reduce the original current of the MPPT unit; scanning the MPPT unit to determine a scanned current of the MPPT unit and a scanned voltage of the MPPT unit; obtaining an adjustment current of the adjustment module and an adjustment voltage of the adjustment module; adjusting the scanned current and the scanned voltage according to the adjustment current and the adjustment voltage; and generating a current-voltage curve according to the adjusted scanned current and the adjusted scanned voltage.

In an embodiment, the processor 101 may be configured to execute the program for generating current and voltage for the photovoltaic power generation system stored in the memory 102 and execute operations including: in a case that the original current is less than the preset current, scanning the MPPT unit to determine the scanned current and the scanned voltage of the MPPT unit, and generating the current-voltage curve according to the scanned current and the scanned voltage.

In an embodiment, the processor 101 may be configured to execute the program for generating current and voltage for the photovoltaic power generation system stored in the memory 102 and execute operations as follow: turning off at least one second switch unit, and obtaining an adjustment current of the adjustment module and an adjustment voltage of the adjustment module, including: determining the adjustment current according to a current value of the photovoltaic string connected in series with the second switch unit being turned off; and determining the adjustment voltage according to a voltage value of the photovoltaic string connected in series with the second switch unit being turned off.

In an embodiment, the processor 101 may be configured to execute the program for generating current and voltage for a photovoltaic power generation system stored in the memory 102 and execute operations as follows: controlling the third switch unit to increase the number of MPPT units connected to the photovoltaic string, and the obtaining an adjustment current of the adjustment module and an adjustment voltage of the adjustment module includes: determining the adjustment current according to the current value of the added MPPT unit being connected to the photovoltaic string; and determining the adjustment voltage according to the voltage value of the added MPPT unit being connected to the photovoltaic string.

In an embodiment, the processor 101 may be configured to execute the program for generating current and voltage for a photovoltaic power generation system stored in the memory 102 and execute operations as follows: turning on the first switch unit, and the obtaining an adjustment current of the adjustment module and an adjustment voltage of the adjustment module includes: determining the adjustment current according to a current value of the absorption unit connected in series with the first switch unit being turned on; and determining the adjustment voltage according to a voltage value of the absorption unit connected in series with the first switch unit being turned on.

In an embodiment, the processor 101 may be configured to execute the program for generating current and voltage for a photovoltaic power generation system stored in the memory 102 and execute operations as follows: controlling the compensation unit to input in reverse a DC current to the MPPT unit, and the obtaining an adjustment current of the adjustment module and an adjustment voltage of the adjustment module includes: determining the adjustment current according to the current value of the compensation unit; and determining the adjustment voltage according to the voltage value of the compensation unit.

Based on the hardware architecture of the device for generating current and voltage for a photovoltaic power generation system described above, an embodiment of a method for generating current and voltage for a photovoltaic power generation system is proposed in the present disclosure.

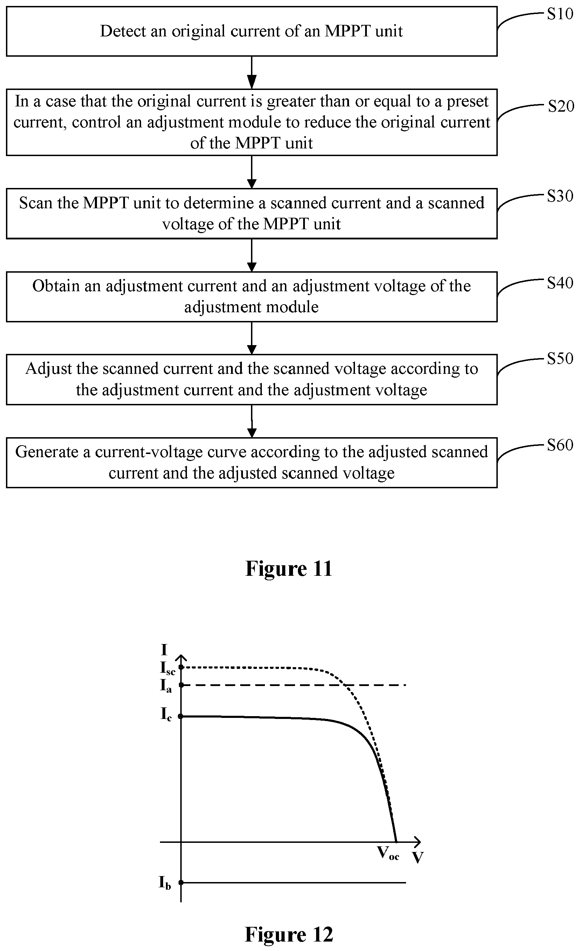

Figure 11 shows a method for generating current and voltage for a photovoltaic power generation system according to a first embodiment of the present disclosure. Referring to Figure 11, the method for generating current and voltage for a photovoltaic power generation system includes steps S10 to S60.

In step S 10, an original current of an MPPT unit is detected.

Specifically, the original current is a current of the photovoltaic power generation system that has not been adjusted by the adjustment module. The original current may be detected by an ammeter connected in series with the MPPT unit. Under strong sunlight, the current generated by a photovoltaic string in the photovoltaic power generation system is greater than or equal to a preset current of the MPPT unit. In this case, an overcurrent protection function provided for ensuring safety of the MPPT unit may be triggered when the current passes through the MPPT unit. The MPPT unit limits the current when the overcurrent protection function is triggered. Under weak sunlight, the current generated by the photovoltaic string in the photovoltaic power generation system is less than the preset current of the MPPT unit. In this case, the overcurrent protection function is not triggered when the current passes through the MPPT unit.

In step S20, in a case that the original current is greater than or equal to the preset current, the adjustment module is controlled to reduce the original current of the MPPT unit.

Specifically, the adjustment module is configured to adjust the original current of the MPPT unit when the original current is too large, reducing the current of the MPPT unit to be less than the preset current. The adjustment module may include an absorption unit and/or a compensation unit. The adjustment module may further control the number of photovoltaic strings connected in a circuit by turning on and off a second switch unit, and control the number of MPPT units connected in the circuit by turning on and off the third switch unit, thereby adjusting the original current of the MPPT unit.

In step S30, the MPPT unit is scanned to determine a scanned current and a scanned voltage of the MPPT unit.

Specifically, the scanned current is the current of the MPPT unit adjusted by the adjustment module, and the scanned voltage is the voltage of the MPPT unit adjusted by the adjustment module.

In step S40, an adjustment current and an adjustment voltage of the adjustment module are acquired.

Specifically, the adjustment current of the adjustment module may be reduction of the current of the MPPT unit caused by the adjustment module, and the adjustment voltage of the adjustment module may be reduction of the voltage of the MPPT unit caused by the adjustment module. An adjustment current and an adjustment voltage of the MPPT unit may be determined according to the adjustment by the adjustment module to the photovoltaic power generation system.

In step S50, the scanned current and the scanned voltage are adjusted according to the adjustment current and the adjustment voltage of the adjustment module.

Specifically, the adjusting the scanned current and the scanned voltage according to the adjustment current and the adjustment voltage may include taking a sum of the adjustment current and the scanned current as an adjusted scanned current; and taking a sum of the adjustment voltage and the scanned voltage as an adjusted scanned voltage.

The adjustment module may include an absorption unit. When adjusting the original current by the absorption unit, the absorption unit may be connected in parallel or in series with the MPPT unit. When the absorption unit is connected in parallel with the MPPT unit, the adjusted scanned current Ix is calculated based on an equation Ix=Ii+Ia, where Ii represents the scanned current and Ia represents the adjustment current of the absorption unit; and the adjusted scanned voltage Ux is calculated based on an equation Ux=Ui, where Ui represents the scanned voltage. When the absorption unit is connected in series with the MPPT unit, the adjusted scanned current Ix is calculated based on an equation Ix=Ii, where Ii represents the scanned current; and the adjusted scanned voltage is calculated based on an equation Ux=Ui+Ua, where Ui represents the scanned voltage, and Ua represents the adjustment voltage.

The adjustment module may include a compensation unit. When adjusting the original current by the compensation unit, the compensation unit may be connected in parallel with the MPPT unit. In this case, the adjusted scanned current Ix is calculated based on an equation Ix=Ii+Ib, where Ii represents the scanned current and Ib represents the adjustment current of the compensation unit; and the adjusted scanned voltage Ux is calculated based on the equation Ux=Ui, where Ui represents the scanned voltage.

The adjustment module may include the absorption unit and the compensation unit. The absorption unit may be connected in parallel or in series with the MPPT unit, and the compensation unit may be connected in parallel or in series with the MPPT unit. In this case, the adjusted scanned current Ix is calculated based on an equation Ix=Ii+Ia+Ib, where Ii represents the scanned current, Ia represents the adjustment current of the absorption unit, and Ib represents the adjustment current of the compensation unit; and the adjusted scanned voltage Ux is calculated based on an equation Ux=Ui+Ua+Ub, where Ui represents the scanned voltage, Ua represents the adjustment voltage of the absorption unit, and Ub represents the adjustment voltage of the compensation unit.

When the current of the MPPT unit is adjusted by the adjustment module adjusting the number of photovoltaic strings connected in the circuit, the adjusted scanned current Ix is calculated based on an equation Ix=Ii+Ic, where Ii represents the scanned current, and Ic represents the adjustment current corresponding to the photovoltaic string that is not connected to the circuit; and the adjusted scanned voltage Ux is calculated based on an equation Ux=Ui+Uc, where Ui represents the scanned voltage, and Uc represents the adjustment voltage corresponding to the photovoltaic string that is not connected to the circuit.

When the current of the MPPT unit is adjusted by the adjustment module adjusting the number of MPPT units connected in the circuit, the adjusted scanned current Ix is calculated based on an equation Ix=Ii+Id, where Ii represents the scanned current, and Id represents the adjustment current when connection mode of the MPPT units is changed; and the adjusted scanned voltage Ux is calculated based on an equation Ux=Ui+Ud, where Ui represents the scanned voltage, and Ud represents the adjustment voltage when the connection mode of the MPPT units is changed.

In step S60, a current-voltage curve is generated based on the adjusted scanned current and the adjusted scanned voltage.

Specifically, the adjusted scanned current is equal to a total current of the multiple photovoltaic strings in the circuit, and the adjusted scanned voltage is a total voltage of the multiple photovoltaic strings in the circuit. The current-voltage curve is generated according to the adjusted scanned current and the scanned voltage. The current-voltage scanning curve may be as shown in Figure 12, in which a solid line corresponds to a curve of the scanned voltage and the scanned current; and a dashed line is a current-voltage curve generated according to the adjusted scanned current and the adjusted scanned voltage.

In the technical solution disclosed in the embodiment, the current of the MPPT unit is reduced by the adjustment module to be less than the preset current of the MPPT unit, so that the overcurrent protection function of the MPPT unit is not triggered, and thereby a complete current-voltage curve of the photovoltaic power generation system can be obtained in a case of a large current.

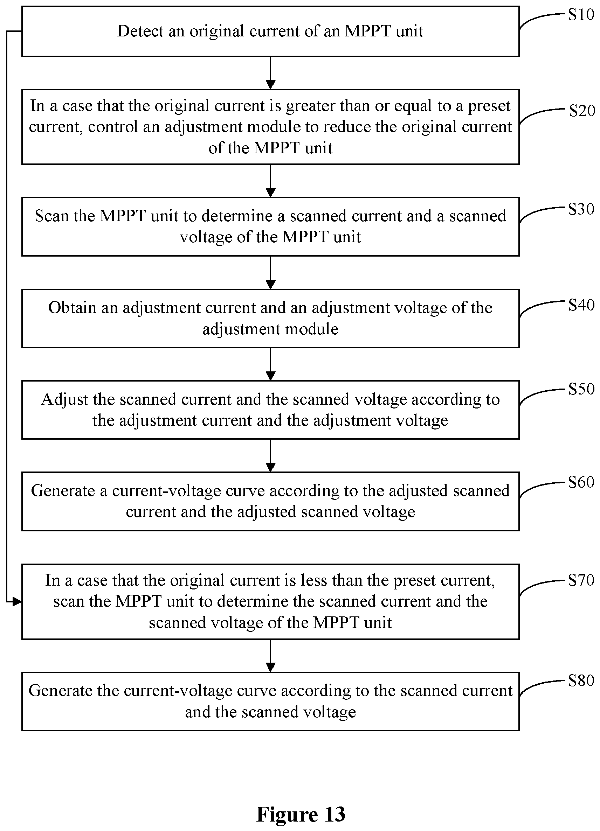

Figure 13 shows a method for generating current and voltage for a photovoltaic power generation system according to a second embodiment of the present disclosure. Referring to Figure 13, based on the method according to the first embodiment, the method for generating current and voltage for a photovoltaic power generation system according to the second embodiment further includes steps S70 to S80 after step S10.

In step S70, in a case that the original current is less than the preset current, the MPPT unit is scanned to determine the scanned current and the scanned voltage of the MPPT unit.

In step S80, the current-voltage curve is generated according to the scanned current and the scanned voltage.

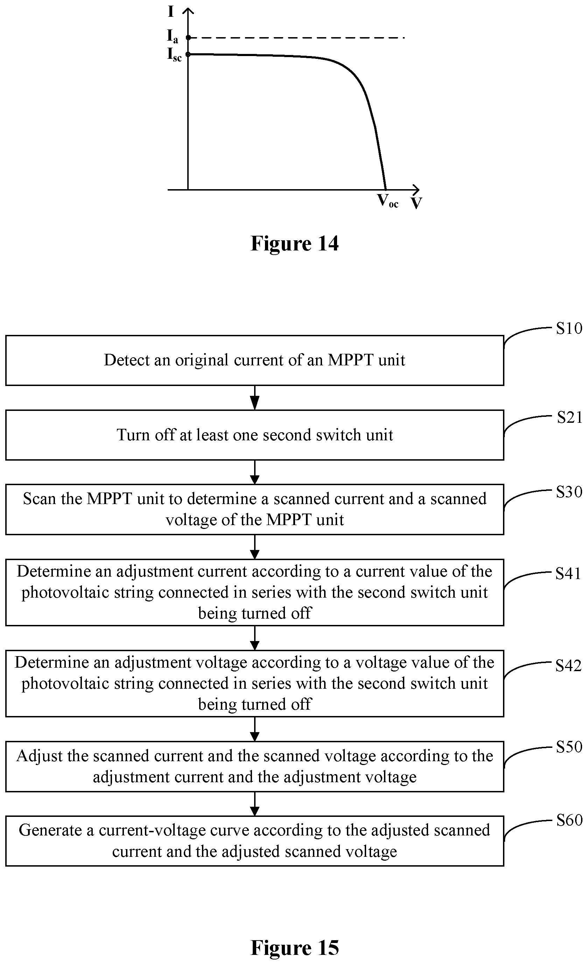

Specifically, when the original current is less than the preset current, the overcurrent protection function of the MPPT unit is not triggered and the current of the MPPT unit is not adjusted, so that the current and voltage of the photovoltaic power generation system correspond to the scanned current and the scanned voltage, based on which the current-voltage curve is generated, as shown in Figure 14.

In this embodiment, when the original current is less than the preset current, the scanned current and the scanned voltage of the MPPT unit are determined without adjustment by the adjustment module, and the current-voltage curve is directly generated according to the scanned current and the scanned voltage.

Figure 15 shows a method for generating current and voltage for a photovoltaic power generation system according to a third embodiment of the present disclosure. Referring to Figure 15, based on the method according to the first or the second embodiment, in the method for generating current and voltage for a photovoltaic power generation system according to the third embodiment, step S20 includes step S21, and step S40 includes steps S41 to S42.

In step S21, at least one second switch unit is turned off.

In step S41, the adjustment current is determined according to a current value of the photovoltaic string connected in series with the second switch unit being turned off.

In step S42, the adjustment voltage is determined according to a voltage value of the photovoltaic string connected in series with the second switch unit being turned off.

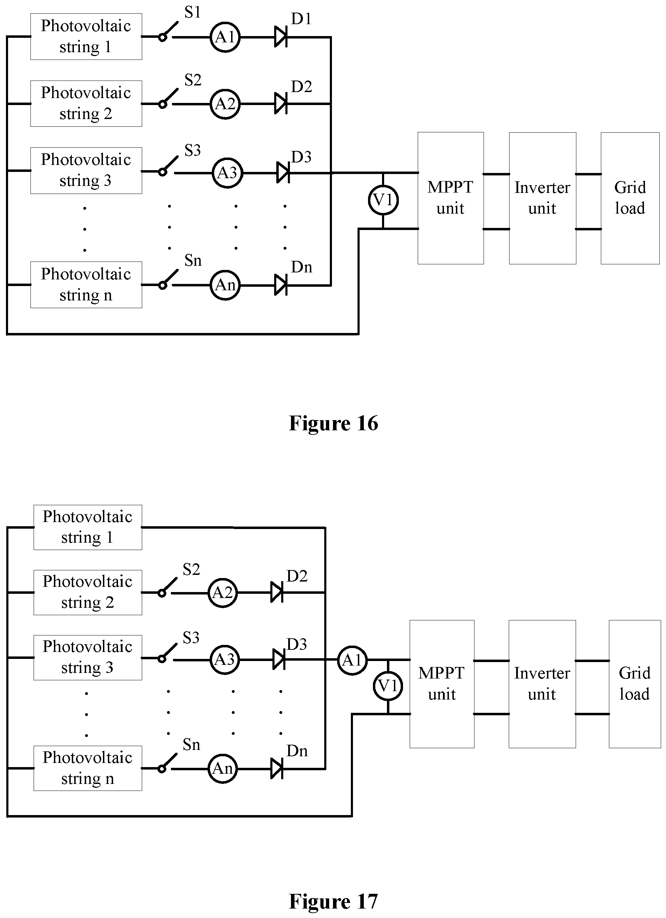

Specifically, in a case of excessive current of the photovoltaic power generation system, the second switch unit for some of the photovoltaic strings may be turned off, so that the current of the MPPT unit is reduced. As shown in Figure 16, the second switch units S1, S2, and S3 may be turned off, so that the current of the MPPT unit is reduced. Figure 16 shows a switch design where the photovoltaic strings are in a one-to-one correspondence to the second switch units, and each photovoltaic string is connected in series with a corresponding second switch unit. The switch design may also be as shown in Figure 8 and Figure 17. In the switch design shown in Figure 8, a design of multiple photovoltaic strings being provided with one second switch unit and a design of one photovoltaic string being provided with one second switch unit are combined. When the current generated by the multiple photovoltaic strings corresponding to the one second switch unit is much less than the preset current of the MPPT unit, the multiple photovoltaic strings being provided with one second switch unit may avoid waste of resources. In the switch design shown in Figure 17, there is a photovoltaic string without a second switch unit. The current generated by the photovoltaic string without a second switch unit is much less than the preset current of the MPPT unit, which saves resources without exceeding the preset current.

The current value of the photovoltaic string connected in series with the second switch unit being turned off may be derived from the current value of the photovoltaic string connected in series with the second switch unit being turned on. If the second switch units are each connected in series with a same number and type of photovoltaic strings, the current value of each photovoltaic string connected in series with the second switch unit being turned off is determined according to the current value of each photovoltaic string connected in series with the second switch unit being turned on. The current value of the photovoltaic string connected in series with the second switch unit being turned off is used as the adjustment current.

The voltage value of the photovoltaic string connected in series with the second switch unit being turned off may be derived from the connection mode of the photovoltaic strings. Since the photovoltaic strings are connected in parallel, the voltage value of each photovoltaic string connected in series with the second switch unit being turned off is equal to the voltage value of each photovoltaic string connected in series with the second switch unit turned on. Therefore, the adjustment voltage is zero.

In the technical solution disclosed in the embodiment, the current of the MPPT unit is reduced to be less than the preset current of the MPPT unit by turning off some of the second switch units, so that the overcurrent protection function of the MPPT unit is not triggered, and thereby a complete current-voltage curve of the photovoltaic power generation system can be obtained with determination of the adjustment current and the adjustment voltage.

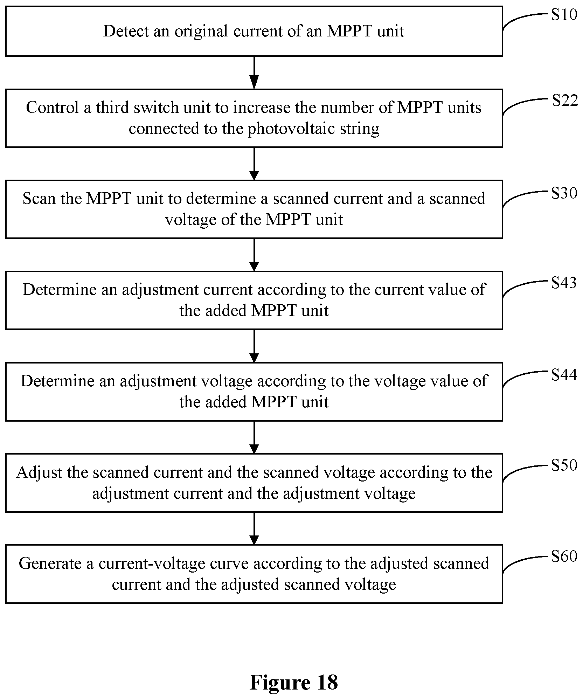

Figure 18 shows a method for generating current and voltage for a photovoltaic power generation system according to a fourth embodiment of the present disclosure. Referring to Figure 18, based on the method according to any one of the first to the third embodiments, in the method for generating current and voltage for a photovoltaic power generation system according to the fourth embodiment, step S20 includes step S22, and step S40 includes steps S43 to S44.

In step S22, the third switch unit is controlled to increase the number of MPPT units connected to the photovoltaic string.

In step S43, the adjustment current is determined according to the current value of the added MPPT unit being connected to the photovoltaic string.

In step S44, the adjustment voltage is determined according to the voltage value of the added MPPT unit being connected to the photovoltaic string.

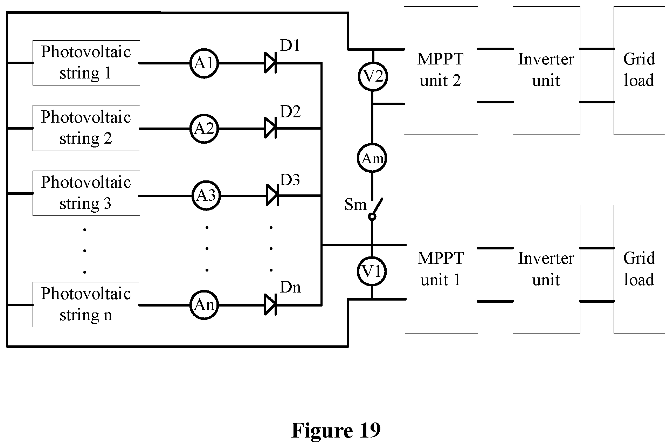

Specifically, there may be multiple MPPT units. In a case of excessive current, the third switch unit for some of the multiple MPPT units may be turned on, so that some of the MPPT units are connected into the circuit in parallel with original MPPT units to shunt the current thereof, causing a reduced current of each of the MPPT units. As shown in Figure 19, the third switch unit Sm may be turned on, so that two MPPT units are connected in parallel, reducing the current of the two MPPT units.

Since the MPPT units are connected in parallel, it is determined that the current value of the newly connected MPPT unit is equal to the adjustment current, and the adjustment voltage is zero as the MPPT units have a same voltage.

In the technical solution disclosed in the embodiment, the current of the MPPT unit is reduced to be less than the preset current of the MPPT unit by turning on the third switch unit to connect additional MPPT units into the circuit to shunt the current of the original MPPT unit, so that the overcurrent protection function of the MPPT units is not triggered, and thereby a complete current-voltage curve of the photovoltaic power generation system can be obtained with determination of the adjustment current and the adjustment voltage.

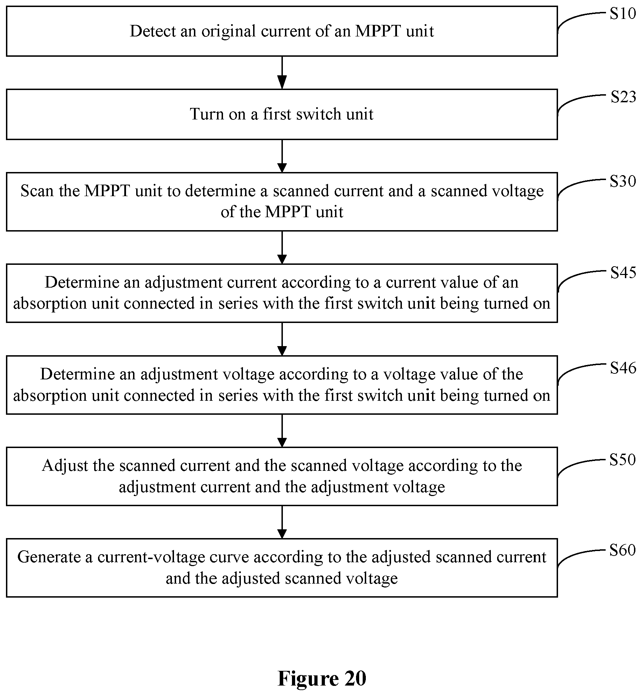

Figure 20 shows a method for generating current and voltage for a photovoltaic power generation system according to a fifth embodiment of the present disclosure. Referring to Figure 20, based on the method according to any one of the first to the fourth embodiments, in the method for generating current and voltage for a photovoltaic power generation system according to the fifth embodiment, step S20 includes step S23, and step S40 includes steps S45 to S46.

In step S23, the first switch unit is turned on.

In step S45, the adjustment current is determined according to a current value of the absorption unit connected in series with the first switch unit being turned on.

In step S46, the adjustment voltage is determined according to a voltage value of the absorption unit connected in series with the first switch unit being turned on.

Specifically, the absorption unit may be connected in parallel with the MPPT unit, so that the current of the MPPT unit is shunted by the load component in the absorption unit when the first switch unit is turned on. Or otherwise, the absorption unit may be connected in series with the MPPT unit, consuming part of the current of the photovoltaic power generation system when the first switch unit is turned on, so as to shunt the current of the MPPT unit.

In a case where the absorption unit is connected in parallel with the MPPT unit, the current of the absorption unit may be obtained by an ammeter connected in series with the absorption unit, or may be calculated based on a resistance value of the load component. The adjustment current is equal to the current of the absorption unit. Since the voltage of the absorption unit is the same as the voltage of the MPPT unit, the adjustment voltage is zero. In a case where the absorption unit is connected in series with the MPPT unit, the current of the absorption unit should be the same as the current of the MPPT unit. However, the current value of the MPPT unit is actually reduced due to a current consumption by the load component in the absorption unit. The current consumption value may be calculated based on the resistance value of the load component of the absorption unit, and the adjustment current may be determined based on the current consumption value. The adjustment voltage is determined based on the voltage value of the load component in the absorption unit.

In the technical solution disclosed in the embodiment, the current of the MPPT unit is reduced to be less than the preset current of the MPPT unit by turning on the first switch unit to connect the absorption unit into the circuit, so that the overcurrent protection function of the MPPT unit is not triggered, and thereby a complete current-voltage curve of the photovoltaic power generation system can be obtained with determination of the adjustment current and the adjustment voltage.

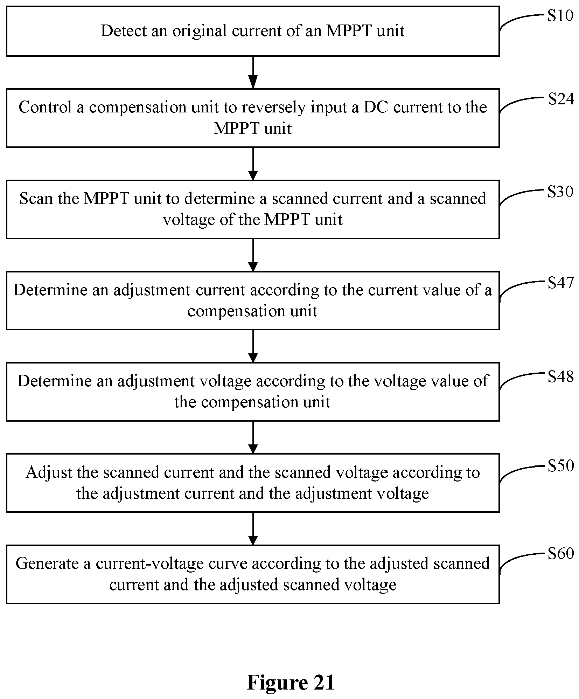

Figure 21 shows a method for generating current and voltage for a photovoltaic power generation system according to a sixth embodiment of the present disclosure. Referring to Figure 21, based on the method according to any one of the first to the fifth embodiments, in the method for generating current and voltage for a photovoltaic power generation system according to the fifth embodiment, step S20 includes step S24, and step S40 includes steps S47 to S48.

In step S24, the compensation unit is controlled to reversely input a DC current to the MPPT unit.

In step S47, the adjustment current is determined according to the current value of the compensation unit.

In step S48, the adjustment voltage is determined according to the voltage value of the compensation unit.

Specifically, the compensation unit may control the inverter unit to convert a DC current or AC current into a DC current with a certain current value. When the current input to the MPPT unit is too large, a DC current may be input to the MPPT unit by the compensation unit to reduce the current of the MPPT unit.

The adjustment current is determined based on the DC current input to the MPPT unit by the compensation unit. Since the compensation unit is connected in parallel with the MPPT unit, the adjustment voltage is zero.

In the technical solution disclosed in the embodiment, the current of the MPPT unit is reduced to be less than the preset current of the MPPT unit by controlling the compensation unit to input the DC current to the MPPT unit, so that the overcurrent protection function of the MPPT unit is not triggered, and thereby a complete current-voltage curve of the photovoltaic power generation system can be obtained with determination of the adjustment current and the adjustment voltage.

A device for generating current and voltage for a photovoltaic power generation system is further provided in the present disclosure. The device for generating current and voltage for a photovoltaic power generation system includes a memory, a processor, and a program for generating current and voltage for a photovoltaic power generation system that is stored in the memory and executable on the processor. The program for generating current and voltage for the photovoltaic power generation system, when executed by the processor, causes the processor to implement steps of the method for generating current and voltage for a photovoltaic power generation system described in the above embodiments.

A storage medium is further provided in the present disclosure. The storage medium stores a program for generating current and voltage a the photovoltaic power generation system which, when executed by the processor, causes the processor to implement steps of the method for generating current and voltage for a photovoltaic power generation system described in the above embodiments.

The sequence numbers of the foregoing embodiments of the present disclosure are merely for the purpose of description, and do not indicate the preference of the embodiments.

It should be noted that, terms "include", "comprise" or any other variants herein are intended to be non-exclusive. Therefore, a process, method, article or device including multiple elements includes not only the elements but also other elements that are not enumerated, or further include the elements inherent for the process, method, article or device. Unless expressively limited otherwise, a process, method, article or device limited by "comprising/including a(n) ..." does not exclude existence of another identical element in such process, method, article or device.

Through the descriptions of the foregoing embodiments, those skilled in the art may clearly understand that the method according to the foregoing embodiments may be implemented by means of software and a necessary general hardware platform, or may be implemented by hardware. However, in most cases, the former implementation is better. Based on such understanding, the technical solutions in the present disclosure or the part contributing on the related art may be implemented in a form of a software product. Such computer software product is stored in a storage medium as described above (such as a read-only memory (ROM) / random access memory (RAM), a magnetic disk, or an optical disc), and may include several instructions for causing a terminal device (which may be a mobile phone, a computer, a server, an air-conditioner, a network device, and the like) to perform the method described in the embodiments of the present disclosure.

The above illustrates only preferred embodiments of the present disclosure, and is not intended to limit the protection scope of the present disclosure. Any equivalent structure or process made by using the contents of the specification and drawings of the present disclosure, or direct or indirect application in other related technical fields shall similarly fall within the protection scope of the present disclosure.

## Claims

1. A photovoltaic power generation system, comprising:
a photovoltaic string (100);
a maximum power point tracking, MPPT, unit (200);
an inverter unit (300); and
a grid load (500);
wherein the photovoltaic power generation system further comprises an adjustment module (400) connected to the MPPT unit (200), and the adjustment module (400) is configured to adjust a current of the MPPT unit (200).

2. The photovoltaic power generation system according to claim 1, wherein the adjustment module (400) comprises an absorption unit (401) connected between the photovoltaic string (100) and the MPPT unit (200), the absorption unit (401) comprises a first switch unit and a load component connected in series, and the load component shunts the current of the MPPT unit (200) when the first switch unit is turned on.

3. The photovoltaic power generation system according to claim 1, wherein the adjustment module (400) comprises a compensation unit (402) connected between the MPPT unit (200) and the inverter unit (300), and the compensation unit (402) is configured to input in reverse a direct current, DC, current to the MPPT unit (200).

4. The photovoltaic power generation system according to claim 1, wherein the photovoltaic power generation system comprises a plurality of photovoltaic strings (100) connected in parallel, and the adjustment module (400) comprises at least one second switch unit (600), wherein the at least one second switch unit (600) is connected in series between the MPPT unit (200) and at least one of the plurality of photovoltaic strings (100).

5. The photovoltaic power generation system according to claim 1, wherein the photovoltaic power generation system comprises a plurality of MPPT units (200) connected in parallel, and the adjustment module (400) comprises a third switch unit connected between the photovoltaic string (100) and the plurality of MPPT units (200), wherein the third switch unit is configured to control a number of MPPT units (200) connected to the photovoltaic string (100).

6. A method for generating current and voltage for a photovoltaic power generation system, applied to the photovoltaic power generation system according to any one of claims 1 to 5, wherein the method comprises:
detecting an original current of the MPPT unit (200); and
in a case that the original current is greater than or equal to a preset current,
controlling the adjustment module (400) to reduce the original current of the MPPT unit (200);
scanning the MPPT unit (200) to determine a scanned current of the MPPT unit (200) and a scanned voltage of the MPPT unit (200);
obtaining an adjustment current of the adjustment module (400) and an adjustment voltage of the adjustment module (400);
adjusting the scanned current and the scanned voltage according to the adjustment current and the adjustment voltage, respectively; and
generating a current-voltage curve according to the adjusted scanned current and the adjusted scanned voltage.

7. The method according to claim 6, wherein after the detecting the original current of the MPPT unit (200), the method further comprises:
in a case that the original current is less than the preset current,
scanning the MPPT unit (200) to determine the scanned current and the scanned voltage of the MPPT unit (200); and
generating the current-voltage curve according to the scanned current and the scanned voltage.

8. The method according to claim 6, wherein the controlling the adjustment module (400) to reduce the original current of the MPPT unit (200) comprises:
turning off at least one second switch unit (600);
wherein the obtaining the adjustment current of the adjustment module (400) and the adjustment voltage of the adjustment module (400) comprises:
determining the adjustment current according to a current value of the photovoltaic string (100) connected in series with a second switch unit (600) being turned off; and
determining the adjustment voltage according to a voltage value of the photovoltaic string (100) connected in series with the second switch unit (600) being turned off.

9. The method according to claim 6, wherein the controlling the adjustment module (400) to reduce the original current of the MPPT unit (200) comprises:
controlling a third switch unit (700) to increase a number of MPPT units (200) connected to the photovoltaic string (100);
wherein the obtaining the adjustment current of the adjustment module (400) and the adjustment voltage of the adjustment module (400) comprises:
determining the adjustment current according to a current value of an added MPPT unit (200) being connected to the photovoltaic string (100); and
determining the adjustment voltage according to a voltage value of the added MPPT unit (200) being connected to the photovoltaic string (100).

10. The method according to claim 6, wherein the controlling the adjustment module (400) to reduce the original current of the MPPT unit (200) comprises:
turning on a first switch unit;
wherein the obtaining the adjustment current of the adjustment module (400) and the adjustment voltage of the adjustment module (400) comprises:
determining the adjustment current according to a current value of an absorption unit (401) connected in series with a first switch unit being turned on; and
determining the adjustment voltage according to a voltage value of the absorption unit (401) connected in series with the first switch unit being turned on.

11. The method according to claim 6, wherein the controlling the adjustment module (400) to reduce the original current of the MPPT unit (200) comprises:
controlling a compensation unit (402) to input in reverse a direct current, DC, current to the MPPT unit (200);
wherein the obtaining the adjustment current of the adjustment module (400) and the adjustment voltage of the adjustment module (400) comprises:
determining the adjustment current according to a current value of the compensation unit (402); and
determining the adjustment voltage according to a voltage value of the compensation unit (402).

12. A device for generating current and voltage for a photovoltaic power generation system, comprising:
a memory;
a processor; and
a program for generating current and voltage for the photovoltaic power generation system, the program being stored in the memory and executable on the processor;
wherein the program, when executed by the processor, causes the processor to implement steps of the method for generating current and voltage for the photovoltaic power generation system according to any one of claims 6 to 11.

13. A storage medium, wherein the storage medium stores a program for generating current and voltage for a photovoltaic power generation system which, when executed by the processor, causes the processor to implement steps of the method for generating current and voltage for the photovoltaic power generation system according to any one of claims 6 to 11.
